Europäisches Patentamt

European Patent Office

Office européen des brevets

(11) Publication number: **0 092 007**
**B1**

(12) **EUROPEAN PATENT SPECIFICATION**

(45) Date of publication of patent specification: **14.10.87**

(51) Int. Cl.⁴: **F 01 D 11/04, F 16 J 15/40**

(21) Application number: **82305902.7**

(22) Date of filing: **05.11.82**

(54) **A shaft seal.**

(30) Priority: **08.03.82 US 355505**

(43) Date of publication of application:
**26.10.83 Bulletin 83/43**

(45) Publication of the grant of the patent:
**14.10.87 Bulletin 87/42**

(84) Designated Contracting States:
**DE FR GB**

(56) References cited:
**DE-B-1 215 889**
**GB-A- 982 085**
**US-A-4 114 058**

(73) Proprietor: **THE GARRETT CORPORATION**
**9851-9951 Sepulveda Boulevard P.O. Box 92248**
**Los Angeles, California 90009 (US)**

(72) Inventor: **Kitaguchi, Sam S.**
**3612, West Mandalay**
**Phoenix Arizona 85023 (US)**

(74) Representative: **Arthur, George Fitzgerald et al**
**KILBURN & STRODE 30, John Street**
**London WC1N 2DD (GB)**

## Description

The present invention relates to a shaft seal for a rotary machine and to a rotary machine incorporating a shaft sealing arrangement. More particularly, this invention relates to a sealing arrangement of the so-called knife edge type which is frequently utilized in high-speed rotary machinery to prevent the leakage of a fluid along a shaft where the shaft penetrates a housing of the machine.

Prior art shaft sealing arrangements are discussed in United States Patents Nos. 1 861 275; 2 140 356; 2 352 336; 2 467 955; 2 478 649; 3 042 417; 3 256 027; and 3 870 384.

Known shaft sealing arrangements have many disadvantages, particularly when they are used in high-speed turbine machines. Among these disadvantages are shaft or housing wear caused by rubbing friction and a sensitivity of the sealing arrangement to shaft eccentricity or vibration. This latter disadvantage may result in leakage of fluid past the seal and can exacerbate the problem of rubbing friction within the sealing arrangement. Consequently, these conventional shaft sealing arrangements are deemed less than satisfactory for application to high-speed turbine machines because of the vibration and differential thermal expansions experienced by such machines.

Alberic's US Patent Specification No. 4114058 teaches the idea of a fluid seal for a rotating shaft, the operation of which seal is different at different shaft speeds. There is a non-contacting sealing fluid gland seal for use at high speeds, and a contacting seal for use at low speeds and there are means for measuring the shaft speed and providing an output signal for input to a control for deciding which of the two seals is to be used in dependence on the shaft speed detected.

GEC's British Patent Specification No. 9282085 discloses a fluid flow seal in which fluid pumped by the rotating components is used to prevent leakage along a gland seal.

The present invention arises from the discovery that with a conventional seal using fluid pressurised by pumping of the rotary components, as for example taught by GEC, the seal may not be adequate at lower speeds because of the drop in sealing fluid pressure.

According to the present invention a shaft sealing arrangement for a rotary machine having a housing with an opening through which passes a rotatable shaft, co-operates with the said housing and the said shaft so as substantially to prevent leakage of a first fluid through the said opening by means of a flow of pressurised sealing fluid through a flow path, and a centrifugally responsive valve means rotating with the shaft and having a flow restricting orifice, is operable at certain rotational speeds of the machine to introduce the orifice into the flow path to restrict the rate of flow of the sealing fluid.

This is a particularly neat method of solving that problem because it only involves a single seal rather than the double seal of Alberic and the operation of the seal is controlled automatically in response to speed changes by the centrifugally responsive device without having to have a separate speed meter and a control system for two different seals.

The invention can be put into practice in various different ways, but several embodiments thereof will now be more particularly described, by way of example, with reference to the accompanying drawings, in which:

Figure 1 is a longitudinal sectional view of a turbine machine according to one preferred embodiment of the invention;

Figure 2 is an enlarged fragmentary view of the encircled portion of Figure 1;

Figure 3 is a fragmentary cross sectional view taken along line 3—3 of Figure 2;

Figure 4 is a cross sectional view similar to Figure 3 and showing parts of the invention in an alternative position;

Figure 5 is a fragmentary cross sectional view similar to Figure 3, illustrating an alternative embodiment of the invention;

Figure 5A illustrates a component part of the embodiment of the invention shown in Figure 5;

Figure 6 is a side view of a component part of another embodiment of the invention;

Figure 6A is a cross sectional view taken along line 6A—6A of Figure 6; and

Figures 7 and 7A illustrate fragmentary views of another alternative embodiment of the invention and are similar to Figures 2 and 4.

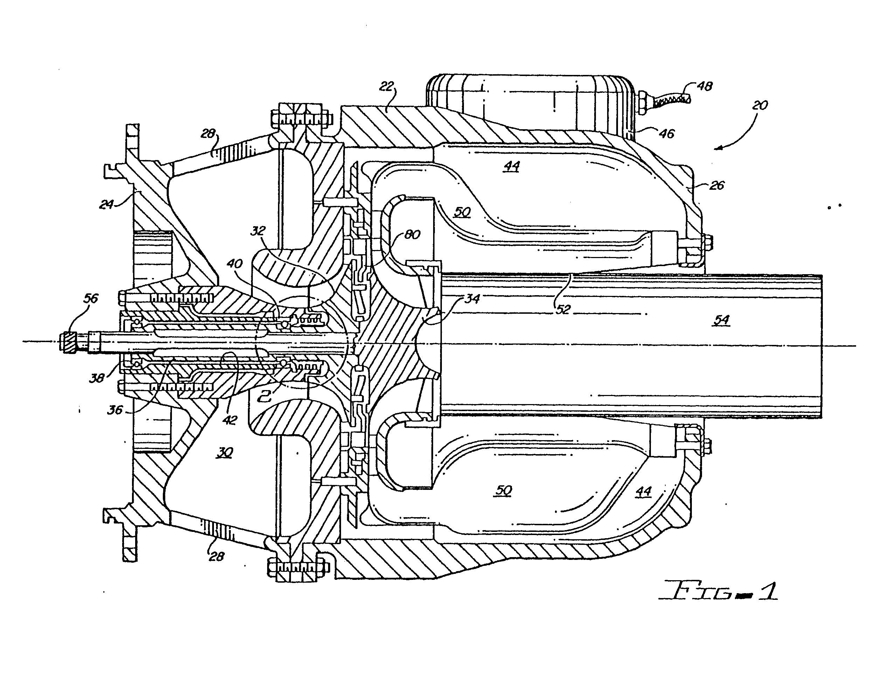

Referring now to the drawings, Figure 1 illustrates a turbine machine 20 having a housing 22 comprising a first part 24 and a second part 26 which are connected by a plurality of circumferentially spaced struts 28 (only two of which are visible in Figure 1). The two parts 24 and 26 of the housing cooperate to define an annular air inlet 30 leading first radially inwardly and leading then generally axially to a centrifugal compressor wheel 32. The compressor wheel 32 and a radial inflow turbine wheel 34 are carried by a shaft assembly. A pair of bearings 38 and 40 carry the shaft assembly and are in turn received in a bore 42 formed in the first housing part 24.

When the compressor wheel 32 is rotated it draws atmospheric air in through the inlet 30 and discharges pressurized air to an annular discharge chamber 44 formed within the second part 26 of the housing. This chamber 44 communicates with a combustor 46 (only a portion of which is visible in Figure 1) which receives pressurized air from the chamber 44 and fuel via a conduit 48 to maintain combustion producing a supply of hot pressurized combustion products. An annular chamber 50 within the chamber 44 receives the combustion products from the combustor 46 and directs them to the turbine wheel 34. An inner, circumferentially extending wall 52 of the part 26 of the housing defines an exhaust duct 54 leading from the turbine wheel 34 to the atmosphere.

When the machine 20 is operating, combustion products from the chamber 50 cause the turbine wheel 34 to turn at high speed. The turbine wheel 34 drives the shaft assembly, which in turn drives the compressor wheel 32. The shaft assembly has a shaft 36 with a splined end portion 56 for connection with a power-absorbing device (not shown).

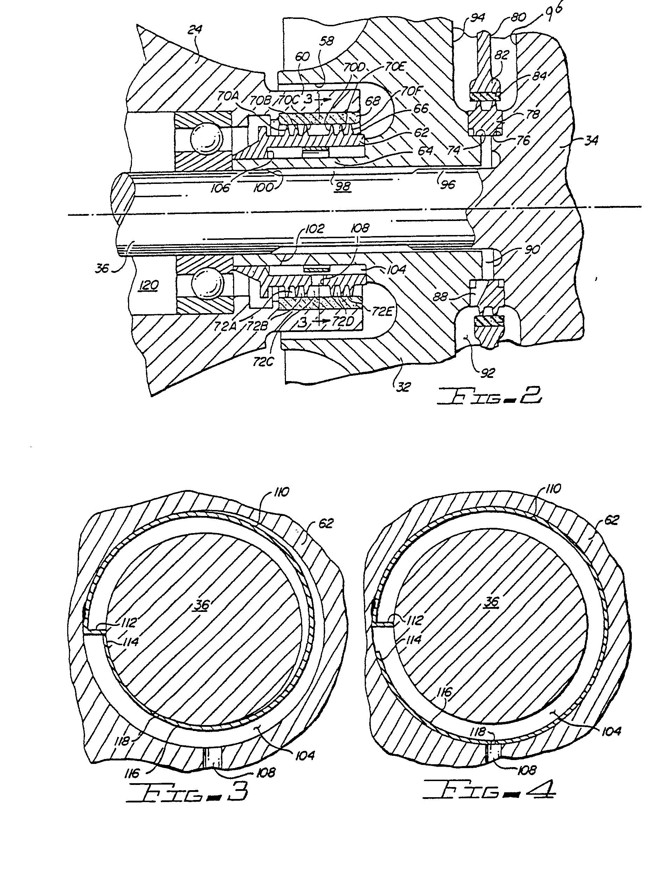

Turning now to Figure 2, it will be seen that the compressor wheel 32 is formed at a radially inner location with an axially extending annular recess 58. The part 24 of the housing includes a generally cylindrical or tubular part 60 which extends axially into the recess 58. A sleeve-like seal member 62 is carried by a generally cylindrical radially innermost central portion 64 of the compressor wheel 32. The sleeve-like seal member 62 forms part of the shaft assembly and the radially outer surface 66 of this sleeve member 62 is spaced radially inwardly from the tubular part of the casing part 24 and has several circumferentially extending and axially spaced knife-edge seal elements 70A to 70F extending radially outwardly towards a tubular member 68 of abrasion resistant material carried on the radially inner surface of the tubular part 60. The knife-edge seal elements 70A to 70F and the tubular member 68 together define a series of adjacent but axially separated annular chambers 72A to 72E, separated that is from each other by the knife-edge seal elements 70A to 70F, but in fluid communication with one another because of a slight radial clearance between the knife-edge elements 70A to 70F and the tubular member 68.

As can be seen in Figure 2 the compressor wheel 32 and the turbine wheel 34 are axially spaced from one another and each defines an annular shoulder 74 or 76 respectively, which face one another. An annular seal member 78 is located by the shoulders 74, 76, this seal having two radially outwardly projecting annular ribs constituting knife-edge seals. The housing 22 also includes an annular partition member 80 extending radially inwardly between the compressor wheel 32 and the turbine wheel 34 and serving to prevent the flow of pressurized air from the compressor 32 to the turbine 34 except by way of the combustor 46. The partition member 80 has an enlarged radially inner rim 82 to which an annular element 84 of abrasion resistant material is secured, which sealingly cooperates with the seal member 78. In the lower part of the seal member 78 (as viewed in Figure 2) it has a notch 88 opening from the side of partition member 80 facing the compressor wheel 32 and leading to an annular chamber 90 between the turbine wheel 34 and the compressor wheel 32 radially inwardly of the shoulders 74, 76. The notch 88 communicates with the chamber 44, into which the compressor 32 discharges, via an annular clearance space 92 between a back face 94 of the compressor wheel 32 and the partition member 80.

A radially inner annular passage 96 leads from the chamber 90 to an annular chamber 98 defined between the inner surface of the central portion 64 of the compressor wheel 32 and a circumferential groove 100 on the shaft 36. A radially extending passage 102 leads from the chamber 98 into an annular chamber 104 defined between an annular recess 106 in the radially inner face of the seal member 62, and an opposed radially-outer face of the central portion 64. A radially extending passage 108 in the seal member 62 itself puts the chamber 104 into communication with the central chamber 72C of the set of chambers 72A to 72E separated by the knife blade seals 70A to 70E.

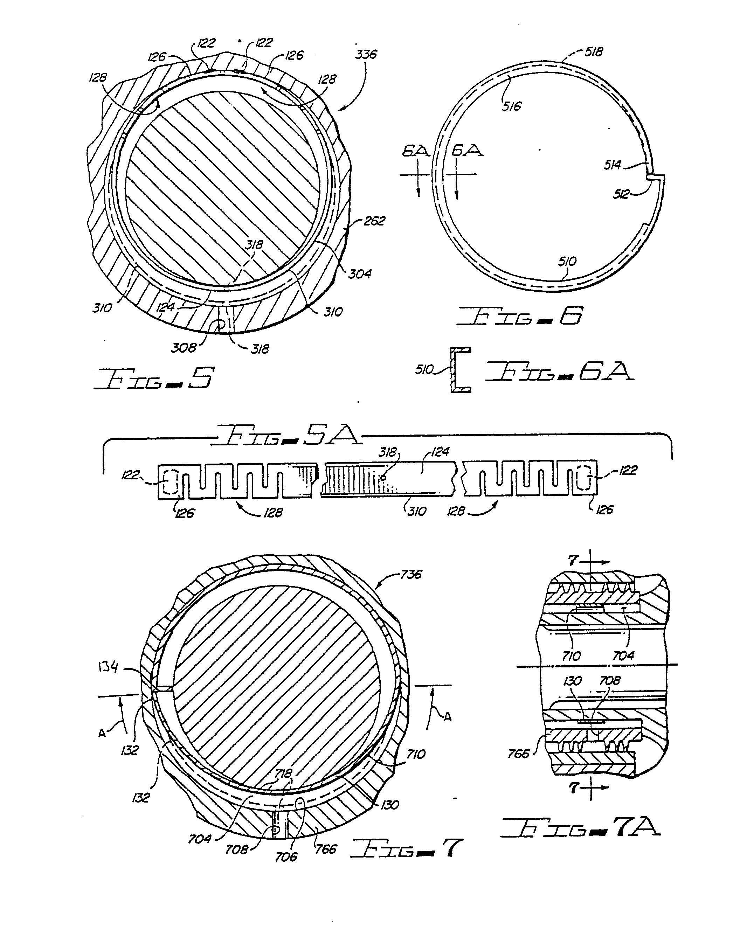

Referring now to Figure 3, it will be seen that a curved valve element 110 is disposed within the annular chamber 104. The valve element 110 comprises a length of resilient strip material, such as spring steel, one end portion 112 of which is bent to extend radially inwardly towards the shaft 36. The valve element 110 is secured to the sealing member 62 adjacent the end portion 112, such as by spot welding. The normal shape of the valve element 110, when unstressed, is the spiral shape shown in Figure 3, in which the end 114 of the strip is resiliently biased against the rests upon the bent end portion 112. Consequently, the remaining portion 116 of the valve element 110, intermediate the two ends, is spaced away from the seal member 62 so that the passage 108 is substantially unobstructed.

Now, when the machine 20 is in operation at normal speed, the shaft assembly 36 rotates at high speed. Consequently, centrifugal force acting upon the valve element 110 causes this to be urged radially outwardly into engagement with the seal member 62, as illustrated in Figure 4. In this position of the valve element 110, a flow restricting metering orifice 118 formed in the valve element 110 becomes aligned with the radial passage 108 in the seal element 62 so that only a reduced flow of pressurized air from the compressor wheel 32 can pass into the chamber 72C. The pressurized air reaches the chamber 72C through the space 92, the notch 88 in the annular seal 78, the chamber 90, the passage 96, the chamber 98, the passage 102, the chamber 104, the metering orifice 118, and finally the radial passage 108 in the seal element 62. From the central chamber 72C, the pressurized air flows in both axial directions via the clearances between the knife edge seal elements 70A to 70E and the sleeve 68. The pressurized air flowing to the right (as seen in Figure 2) from the chamber 72C escapes eventually into the low pressure area in the inlet 30 upstream of the compressor wheel 32.

Similarly, pressurized air flowing to the left (as seen in Figure 2) from the chamber 72C flows into a chamber 120 within the bore 42 in the housing part 24. The chamber 120 is supplied with a flow of lubricating oil during operation of the machine 20 to cool and lubricate the bearings 38 and 40. The pressurized air flowing from the chamber 72C past the knife edge elements 70A to 70C and into the chamber 120 prevents the lubricating oil in the chamber 120 from being drawn into the low pressure area of the inlet 30. From the chamber 120, the lubricating oil and air are scavenged by means not shown to an oil sump (also not shown) where the air is separated from the oil and vented.

The size of the orifice 118 is selected to allow an appropriate and predetermined air flow rate from the compressor wheel 32 to the chamber 72C at normal design speed operation of the machine 20. Thus, leakage of lubricating oil into the inlet 30 is prevented while minimizing the amount of pressurized air bled from the compressor wheel for this purpose.

During start-up, and when the machine 20 is running after shut-off, the compressor wheel 32 maintains a low pressure at the inlet 30, even though it does not develop its maximum design pressure because it is operating below its design speed. As a result, the small orifice 118, if it were permanently operative, would only allow an insufficient air flow from the compressor wheel 32 to chamber 72C so that leakage of lubricating oil into the inlet 30 would be possible. This situation is avoided, however, by the valve element 110 the weight and resilience of which are selected so that the valve moves from its position illustrated in Figure 4 to that illustrated in Figure 3 as the machine slows down. Thus, at lower machine speeds the full flow area of the passage 108 is made available for air flow into the chamber 72C. As a result, a sufficient air flow is maintained into the chamber 72C to prevent oil leakage despite the lower air pressure supplied by the compressor wheel 32. Likewise, during start-up of the machine 20, the valve element remains in the position illustrated in Figure 3, to allow air flow through the full area of passage 108 during the initial low-speed operation of the compressor wheel 32 as the machine runs up to its design speed. At a certain speed, the resilience of the valve element is overcome by centrifugal force and the valve element then moves to the position illustrated in Figure 4 to prevent an excessively high air flow to the chamber 72C.

An alternative embodiment of the invention is illustrated in Figures 5 and 5A, wherein features analogous to those described above in relation to Figures 1 to 4 are identified with the numerals used previously but increased by 200. From Figures 5 and 5A it will be seen that a curved valve element 310 is disposed within a chamber 304 from which leads a radial passage 308. The valve element 310 comprises a strip of resilient material, a developed view of which is shown in Figure 5A, which is curled into an approximately circular shape, as seen in viewing Figure 5, and secured to a seal member 262 at two locations 122, such as by spot welding. The valve element 310 has a central portion 124 and a pair of opposite end portions 126. The end portions 126 define the securing locations 122. A pair of serpentine-shape resiliently elastic sections 128 connect the central portion 124 to the end portions 126 to allow for relative movement therebetween. As can be seen in Figure 5, the valve element 310 in its unstressed position is disposed with its central portion 124 spaced from the passage 308 so that the full area of the passage 308 is available for the flow of pressurized air. When the rotational speed of the shaft assembly 336 is above a certain predetermined speed, however, the centrifugal force overcomes the resilience of the serpentine sections 128 so that the central portion 124 is urged radially outwardly into engagement with the seal member 262 (as is illustrated in broken outline in Figure 5).

The central portion 124 has a flow limiting metering orifice 318 which is in alignment with the passage 308 when the valve element 310 is in its radially outward position, whereby to restrict the flow of pressurized air through the passage 308 when the speed of the shaft assembly 336 is above the said certain predetermined speed. When the rotational speed of the shaft assembly 336 decreases below the said certain predetermined speed, the serpentine resiliently elastic sections 128 pull the central portion 124 away from the passage 308 to allow an increased air flow at the lower shaft speeds.

Figures 6 and 6A illustrate another embodiment of the invention in which a valve element 510 has a similar shape to the corresponding valve element in the embodiment of Figures 1—4. However, the valve element 510 is channel or U-shape in cross section as illustrated in Figure 6A throughout most of its length. The valve element 510 operates in the same manner as the valve element 110 of Figures 1—4. However, the valve element 510 offers a higher ratio of spring rate to mass so that the valve element 510 moves between its two alternative positions at a higher rotational speed than the valve element in the embodiment of Figures 1 to 4. Thus, the configuration of valve element 510 is particularly appropriate for use in machines having a very high design operating speed.

Figures 7 and 7A illustrate a further embodiment of the invention in which a valve element 710 has a shape similar to that of the valve element 110 in the embodiment of Figures 1—4 and to element 510 of Figures 6 and 6A. However, the valve element 710 operates slightly differently from these in order to obtain a high operating speed whilst nevertheless using a flat rather than channel cross-sectional shape for the valve element 710. As can be seen in Figure 7A, the valve element 710 is formed of flat strip material like the element 110 of Figures 1—4, but a portion 130 of the valve element 710 (which is delimited by an arc the ends of which are indicated by the arrows A) in its normal (that is unstressed) shape has a radius of curvature which is larger than the radius of curvature of the recess 706. Consequently, a free end 132 of the valve element 710 contacts the radially inner surface of the seal member 662. When the shaft assembly 736 is rotating, the portion 130 of the valve element 710 resists the centrifugal force like a simple beam (albeit, a curved simple beam) which is constrained at its right end (as viewed in Figure 7) and slidably supported at its left end (again as viewed in Figure 7).

When the shaft assembly 736 reaches a certain predetermined speed, the valve element 720 shifts to the stressed position illustrated in broken outline in Figure 7, in which position an orifice 718 is in alignment with a passage 708 whereby to restrict the air flow through the passage 708 which below the said predetermined speed is not restricted. When the rotational speed of the shaft assembly 736 again falls below the predetermined speed, the valve element 710 moves back to the position illustrated in solid outline in Figure 7 to allow a substantially unrestricted air flow through the passage 708.

**Claims**

1. A shaft sealing arrangement for a rotary machine having a housing (22, 24) with an opening (42) through which passes a rotatable shaft (36), the shaft sealing arrangement cooperating with the said housing (22, 24) and the said shaft (36) so as substantially to prevent leakage of a first fluid through the said opening (42) by means of a flow of pressurised sealing fluid through a flow path (92, 88, 90, 96, 98, 102, 104, 108, 72C, 120), characterised by centrifugally responsive valve means (110) rotating with the shaft and having a flow restricting orifice (118) the valve means being operable at certain rotational speeds of the machine to introduce the orifice into the flow path to restrict the rate of flow of the sealing fluid.

2. A shaft sealing arrangement according to Claim 1, characterised in that an annular chamber (104) constituting part of the flow path for the sealing fluid is provided within the rotating parts.

3. A shaft sealing arrangement according to Claim 2, characterised in that the said centrifugally responsive valve means (110) includes a valve element (110) extending circumferentially within the said annular chamber (104) and movable between a first position and a second position as the centrifugal force passes a threshold valve whereby to introduce the orifice into the flow path at higher speeds of rotation.

4. A shaft sealing arrangement according to Claim 3, characterised in that the annular chamber (104) is partly defined by a radially outer wall (62), and the said valve element (110) comprises an elongate strip (110) of resiliently elastic material including a portion (116) which is spaced radially inwardly of the radially outer wall (62) in the said first position of the valve element (110), this portion (116) being displaceable radially outwardly by the centrifugal force arising upon rotation of the shaft (36) above a certain predetermined speed to contact the said radially outer wall (62) in the said second position of the valve element (110).

5. A shaft sealing arrangement according to Claim 4, characterised in that the said radially outer wall (62) has a passage (108) therein leading to the valve element (110) and constituting part of the said flow path, the passage (108) leads from the said chamber (104) through the said radially outer wall (62) thereof, and the said portion (116) of the valve element (110) having the flow restricting metering orifice (118) therein, which orifice (118) is brought into register with the passage (108) when the said valve element (110) moves to its second position whereby to restrict the flow of sealing fluid through the passage (108).

6. A shaft sealing arrangement according to Claim 5, characterised in that the said elongate strip (110) constituting the valve element has a pair of opposite end portions (112, 114) and the valve element (110) is secured to one of the rotating parts at or adjacent one (112) of the said end portions (112, 114) and has a shape within the said annular chamber which is substantially a spiral in all positions of the valve element.

7. A shaft sealing arrangement according to Claim 4 or Claim 5, characterised in that the said elongate strip (110) constituting the valve element has a pair of opposite end portions (132, 134) engaging the said radially outer wall (706) with one of the said end portions (132) being slidable with respect to the said wall (706).

8. A shaft sealing arrangement according to Claim 7, characterised in that a portion (130) of the elongate strip has a radius of curvature greater than the radius of curvature of the said outer wall (706), this portion (130) being movable radially into and out of engagement with the said outer wall (706) in response to centrifugal force to move the said valve means respectively between said first and said second positions.

9. A shaft sealing arrangement according to Claim 4 or Claim 5, in which both of the end portions (126) of the elongate strip (310) are secured to the said radially outer wall (262) of the annular chamber and the elongate strip (310) includes a pair of serpentine-shape resiliently elastic sections (128) each of which is located between the said radially displaceable portion (124) of the strip (310) and a respective end portion thereof (126).

10. A shaft sealing arrangement according to any of Claims 2 to 9, characterised in that the said housing (22, 24) includes an axially and circumferentially extending wall (60) substantially defining the said opening (42) through which the shaft (36) passes, this wall (60) being spaced radially outwardly of the radially outer surface of the shaft (36) so that there is an axially extending clearance between them, the shaft sealing arrangement including at least two circumferentially extending and axially spaced knife-edge seal elements (70A—70F) extending radially either from the housing wall (60) or the shaft (36) towards the shaft (36) or the housing wall (60) respectively, the said knife-edge seal elements (70A—70F) cooperating with the shaft (36) or the housing wall (60) to effect a seal between the annular chamber (104) and the outside.

11. A shaft sealing arrangement according to any of Claims 2—10, characterised in that the shaft (36) carries a compressor wheel (32) which in operation of the machine discharges pressurised air to a discharge area (44) and there is a clearance space (92) extending radially inwardly from the discharge area (44) towards the shaft adjacent a back face (94) of the compressor wheel (32); a further chamber (98) within the shaft (36) communicating with the clearance space (92);

and a passage (102) within the rotary parts putting the said further chamber (98) into communication with the said annular chamber (104).

12. A shaft sealing arrangement according to Claim 11, characterised in that the compressor wheel (32) has a back face (94) facing towards a back face (96) of a turbine wheel (34) mounted on said shaft (36) for rotation therewith, the compressor wheel (32) and the turbine wheel (34) being axially spaced to define a radially extending axial space therebetween, the housing (22, 24) including a partition member (80) extending radially inwardly towards the shaft (36) within the space between the turbine wheel (34) and the compressor wheel (32) and defining with the back face (94) of the compressor wheel (32) the said clearance space (92), a further sealing arrangement (78) cooperating with the partition member (80) and with the rotary parts whereby substantially to prevent fluid flow between the partition member and the rotary parts, the flow path including a fluid flow passage (88) providing communication between the clearance space (92) and the said chamber (104) of the machine.

13. A shaft sealing arrangement according to Claim 12, characterised in that the compressor wheel (32) and the turbine wheel (34) each have a shoulder (74, 76) facing the shoulder of the other, the further sealing arrangement (78) being annular and being disposed upon the shoulders (74, 76) of the compressor and turbine wheels (32, 34).

**Patentansprüche**

1. Wellendichtungsanordnung für eine rotierende Maschine mit einem Gehäuse (22, 24) mit einer Öffnung (42), durch die eine Drehwelle (36) geführt ist, wobei die Wellendichtungsanordnung mit dem Gehäuse (22, 24) und der Welle (36) so zusammenwirkt, daß im wesentlichen das Abfließen eines ersten Fluids durch die Öffnung (42) mit Hilfe eines druckaufgeladenen Abdichtfluidstromes durch einen Durchflußpfad (92, 88, 90, 96, 98, 102, 104, 108, 72C, 120) verhindert wird, gekennzeichnet durch eine auf Zentrifugalkraft ansprechende Ventilvorrichtung (110), die mit der Welle rotiert und die eine den Durchflußbegrenzende Mündung (118) aufweist, wobei die Ventilvorrichtung bei bestimmten Drehzahlen der Maschine so betätigbar ist, daß die Mündung in den Durchflußpfad eingeführt wird, um die Durchflußgeschwindigkeit des Abdichtfluids zu begrenzen.

2. Wellendichtungsanordnung nach Anspruch 1, dadurch gekennzeichnet, daß eine Ringkammer (104), die einen Teil des Durchflußpfades für das Abdichtfluid darstellt, innerhalb der rotierenden Teile vorgesehen ist.

3. Wellendichtungsanordnung nach Anspruch 2, dadurch gekennzeichnet, daß die auf Zentrifugalkraft ansprechende Ventilvorrichtung (110) ein Ventilelement (110) aufweist, das sich in Umfangsrichtung innerhalb der Ringkammer (104) erstreckt und zwischen einer ersten und einer zweiten Position bewegbar ist, wenn die Zentrifugalkraft ein Schwellwertventil passiert, wodurch die Mündung in den Durchflußpfad bei höheren Drehgeschwindigkeiten eingeführt wird.

4. Wellendichtanordnung nach Anspruch 3, dadurch gekennzeichnet, daß die Ringkammer (104) teilweise durch eine radial äußere Wandung (62) definiert ist, und daß das Ventilelement (110) einen länglichen Streifen (110) aus elastisch nachgiebigem Material mit einem Teil (116) aufweist, der in radialer Richtung nach innen im bezug auf die radial äußere Wand (62) in der ersten Position des Ventilelementes (110) versetzt ist, wobei dieser Teil (116) radial nach außen durch die Zentrifugalkraft verschiebbar ist, die bei einer Drehung der Welle (36) oberhalb einer vorgegebenen Drehzahl auftritt, damit er in Kontakt mit der radial äußeren Wand (62) in der zweiten Position des Ventilelementes (110) kommt.

5. Wellendichtanordnung nach Anspruch 4, dadurch gekennzeichnet, daß die radial äußere Wand (62) einen Durchgangskanal (108) aufweist, der zum Ventilelement (110) führt und der einen Teil des Durchflußpfades darstellt, daß der Durchflußkanal (108) von der Kammer (104) durch deren radial äußere Wand (62) führt, und daß der Teil (116) des Ventilelementes (110) die den Durchfluß begrenzende Zumeßmündung (118) aufweist, welche in Deckung mit dem Durchflußkanal (108) gebracht wird, wenn das Ventilelement (110) sich in seine zweite Position bewegt, wodurch der Durchfluß des Abdichtfluids durch den Durchflußkanal (108) begrenzt wird.

6. Wellendichtanordnung nach Anspruch 5, dadurch gekennzeichnet, daß der längliche Streifen (110), der das Ventilelement darstellt, ein Paar entgegengesetzter Endteile (112, 114) aufweist, und daß das Ventilelement (110) mit einem der rotierenden Teile an oder in der Nähe eines (112) der Endteile (112, 114) befestigt ist sowie eine Form innerhalb der Ringkammer hat, die im wesentlichen in allen Positionen des Ventilelementes eine Spirale ist.

7. Wellendichtanordnung nach Anspruch 4 oder 5, dadurch gekennzeichnet, daß der längliche Streifen (110), der das Ventilelement darstellt, ein Paar von entgegengesetzten Endteilen (132, 134) aufweist, die mit der radial äußeren Wand (706) in Eingriff kommen, wobei eines dieser Endteile (132) in bezug auf die Wand (706) gleitend angeordnet ist.

8. Wellendichtanordnung nach Anspruch 7, dadurch gekennzeichnet, daß ein Teil (130) des länglichen Streifens einen Krümmungsradius besitzt, der größer ist als der Krümmungsradius der äußeren Wand (706), wobei dieser Teil (130) in radialer Richtung in und außer Eingriff mit der äußeren Wand (706) in Abhängigkeit von der Zentrifugalkraft bewegbar ist, um die Ventilvorrichtung zwischen den ersten und zweiten Positionen zu bewegen.

9. Wellendichtanordnung nach Anspruch 4 oder 5, bei der beide Endteile (126) des länglichen Streifens (310) mit der radial äußeren Wand (262) der Ringkammer befestigt sind, und der längliche Streifen (310) ein Paar serpentinenförmiger, elastisch nachgiebiger Abschnitte (128) aufweist, von denen jeder zwischen dem radial verschiebbaren Teil (124) des Streifens (310) und einem entsprechenden Endteil desselben (126) angeordnet ist.

10. Wellendichtanordnung nach einem der Ansprüche 2 bis 9, dadurch gekennzeichnet, daß das Gehäuse (22, 24) eine axial und in Umfangsrichtung verlaufende Wand (60) aufweist, die im wesentlichen die Öffnung (42) festlegt, durch die die Welle (36) geführt ist, wobei diese Wand (60) in radialer Richtung außerhalb der radial äußeren Oberfläche der Welle (36) so versetzt ist, daß dazwischen ein axial verlaufender Freiraum entsteht, wobei die Wellendichtanordnung mindestens zwei in Umfangsrichtung verlaufende und axial versetzte messerkantenartige Abdichtelemente (70A—70F) besitzt, die in radialer Richtung entweder von der Gehäusewand (60) oder der Welle (36) gegen die Welle (36) oder die Gehäusewand (60) verlaufenden, und wobei die messerkantenartigen Abdichtelemente (70A—70F) mit der Welle (36) oder der Gehäusewand (60) so zusammenwirken, daß eine Abdichtung zwischen der Ringkammer (104) und der Außenseite erzielt wird.

11. Wellendichtanordnung nach einem der Ansprüche 2 bis 10, dadurch gekennzeichnet, daß die Welle (36) ein Kompressorrad (32) aufnimmt, das im Betrieb der Maschine Druckluft an einen Auslaßbereich (44) abgibt, daß ein Freiraum (92) vorgesehen ist, der sich radial nach innen von der Auslaßfläche (44) gegen die Welle in der Nähe einer Rückseite (94) des Kompressorrades (32) erstreckt, daß eine weitere Kammer (98) innerhalb der Welle (36) mit dem Freiraum (92) in Verbindung steht, und daß ein Durchflußkanal (102) innerhalb der rotierenden Teile die weitere Kammer (98) in Verbindung mit der Ringkammer (104) bringt.

12. Wellendichtanordnung nach Anspruch 11, dadurch gekennzeichnet, daß das Kompressorrad (32) eine Rückseite (94) aufweist, die gegen eine Rückseite (96) eines auf der Welle (36) drehbar mit der Welle befestigten Turbinenrades (34) gerichtet ist, daß das Kompressorrad (32) und das Turbinenrad (34) axial so versetzt sind, daß sie einen radial verlaufenden, axial Raum dazwischen festlegen, wobei das Gehäuse (22, 24) ein Trennbauteil (80) aufweist, das in radialer Richtung nach innen auf die Welle (36) zu innerhalb des Raumes zwischen dem Turbinenrad (34) und dem Kompressorrad (32) verläuft und mit der Rückseite (94) des Kompressorrades (32) den Freiraum (92) definiert, und daß eine weitere Abdichtanordnung (78) mit dem Trennbauteil (80) und den rotierenden Teilen so zusammenwirkt, daß zur Verhinderung eines Fluidstromes zwischen dem Trennbauteil und den rotierenden Teilen der einen Fluiddurchflußkanal (88) aufweisende Durchflußpfad eine Verbindung zwischen dem Freiraum (92) und der Kammer (104) der Maschine bildet.

13. Wellendichtanordnung nach Anspruch 12, dadurch gekennzeichnet, daß das Kompressorrad (32) und das Turbinenrad (34) jeweils eine Schulter (74, 76) aufweisen, die der Schulter des anderen Teiles zugewandt ist, und daß die weitere Abdichtanordnung (78) ringförmig ausgebildet und auf den Schultern (74, 76) des Kompressors und der Turbinenräder (32, 34) angeordnet ist.

**Revendications**

1. Dispositif d'étanchéité d'arbre pour une machine tournante comprenant un carter (22, 24) qui comporte une ouverture (42) dans laquelle passe un arbre rotatif (36), le dispositif d'étanchéité d'arbre coopérant avec ledit carter (22, 24) et ledit arbre (36) de manière à empêcher sensiblement la fuite d'un premier fluide à travers ladite ouverture (42) au moyen d'une circulation de fluide d'étanchéité sous pression suivant un chemin de circulation (92, 88, 90, 96, 98, 102, 104, 108, 72C, 120), caractérisé en ce qu'il comprend des moyens d'obturation (110) sensibles à la force centrifuge, qui tournent avec l'arbre et comportent un orifice de limitation de débit (118), les moyens d'obturation fonctionnant à certaines vitesses de rotation de la machine de manière à introduire l'orifice dans le chemin de circulation pour limiter le débit du fluide d'étanchéité.

2. Dispositif d'étanchéité d'arbre suivant la revendication 1, caractérisé en ce qu'une chambre annulaire (104), constituant une partie du chemin de circulation du fluide d'étanchéité, est prévue à l'intérieur des parties tournantes.

3. Dispositif d'étanchéité d'arbre suivant la revendication 2, caractérisé en ce que lesdits moyens d'obturation (110) sensibles à la force centrifuge comprennent un élément obturateur (110) qui s'étend circonférentiellement à l'intérieur de ladite chambre annulaire (104) et qui est mobile entre une première position et une deuxième position lorsque la force centrifuge franchit une valeur de seuil, de façon à introduire l'orifice dans le chemin de circulation à de plus grandes vitesses de rotation.

4. Dispositif d'étanchéité d'arbre suivant la revendication 3, caractérisé en ce que la chambre annulaire (104) est partiellement définie par une paroi radialement extérieure (62) et en ce que ledit élément obturateur (110) est constitué par une bande allongée (110) de matière élastique comprenant une partie (116) qui est espacée radialement vers l'intérieur de la paroi radialement extérieure (62) dans ladite première position de l'élément obturateur (110), ladite partie (116) étant déplaçable radialement vers l'extérieur par la force centrifuge engendrée par la rotation de l'arbre (36) au-dessus d'une certaine vitesse prédéterminée, de manière à venir en contact avec ladite paroi radialement extérieure (62) dans ladite deuxième position de l'élément obturateur (110).

5. Dispositif d'étanchéité d'arbre suivant la revendication 4, caractérisé en ce que ladite paroi radialement extérieure (62) comporte un passage (108) conduisant à l'élément obturateur (110) et constituant une partie dudit passage de circulation, le passage (108) s'étendant depuis ladite chambre (104) et traversant sa paroi radialement extérieure (62), ladite partie (116) de l'élément obturateur (110) comportant l'orifice calibré (118) de limitation de débit, ledit orifice (118) étant amené en alignement avec le passage (108) lorsque ledit élément obturateur (110) se déplace à sa deuxième position, de manière à limiter le débit de fluide d'étanchéité à travers le passage (108).

6. Dispositif d'étanchéité d'arbre suivant la revendication 5, caractérisé en ce que ladite bande allongée (110) constituant l'élément obturateur comprend deux parties d'extrémité opposées (112, 114), l'élément obturateur (110) étant fixé à l'une des parties tournantes à l'endroit ou près de l'une (112) desdites parties d'extrémité (112, 114), et il présente une configuration, à l'intérieur de ladite chambre annulaire, qui est sensiblement une spirale dans toutes les positions de l'élément obturateur.

7. Dispositif d'étanchéité d'arbre suivant la revendication 4 ou la revendication 5, caractérisé en ce que ladite bande allongée (110) constituant l'élément obturateur comprend deux parties d'extrémité opposées (132, 134) qui sont en contact avec ladite paroi radialement extérieure (706), l'une desdites parties d'extrémité (132) pouvant glisser par rapport à ladite paroi (706).

8. Dispositif d'étanchéité d'arbre suivant la revendication 7, caractérisé en ce qu'une partie (130) de la bande allongée présente un rayon de courbure plus grand que le rayon de courbure de ladite paroi extérieure (706), la partie (130) étant mobile radialement en contact et hors du contact avec ladite paroi extérieure (706) en réponse à la force centrifuge, pour déplacer lesdits moyens d'obturation respectivement entre lesdites première et deuxième positions.

9. Dispositif d'étanchéité d'arbre suivant la revendication 4 ou la revendication 5, dans lequel les deux parties d'extrémité (126) de la bande allongée (310) sont fixées à ladite paroi radialement extérieure (262) de la chambre annulaire et en ce que la bande allongée (310) comprend deux régions élastiques sinueuses (128) dont chacune est placée entre ladite partie radialement déplaçable (124) de la bande (310) et une partie d'extrémité respective (126) de la bande.

10. Dispositif d'étanchéité d'arbre suivant l'une quelconque des revendications 2 à 9, caractérisé en ce que ledit carter (22, 24) comprend une paroi (60) qui s'étend axialement et circonférentiellement, définissant sensiblement ladite ouverture (42) dans laquelle passe l'arbre (36), ladite paroi (60) étant espacée radialement vers l'extérieur de la surface radialement extérieure de l'arbre (36) de sorte qu'il existe entre elles un jeu s'étendant axialement, le dispositif d'étanchéité d'arbre comprenant au moins deux éléments d'étanchéité en lame de couteau (70A—70F) circonférentiels et axialement espacés, dirigés radialement à partir de la paroi de carter (60) ou de l'arbre (36), vers l'arbre (36) ou la paroi de carter (60) respectivement, lesdits éléments d'étanchéité en lame de couteau (70A—70F) coopérant avec l'arbre (36) ou la paroi de carter (60) pour engendrer une étanchéité entre la chambre annulaire (104) et l'extérieur.

11. Dispositif d'étanchéité d'arbre suivant l'une quelconque des revendications 2 à 10, caractérisé en ce que l'arbre (36) porte une roue de compresseur (32) qui, pendant le fonctionnement de la machine, refoule de l'air sous pression vers une zone de sortie (44) et il existe un espace libre (92) qui s'étend radialement vers l'intérieur à partir de la zone de sortie (44), vers l'arbre, près d'une face arrière (94) de la roue de compresseur (32); une autre chambre (98) ménagée dans l'arbre (36) communiquant avec l'espace libre (92), et un passage (102) à l'intérieur des parties tournantes mettant en communication ladite autre chambre (98) avec ladite chambre annulaire (104).

12. Dispositif d'étanchéité d'arbre suivant la revendication 11, caractérisé en ce que la roue de compresseur (32) présente une face arrière (94) tournée vers une face arrière (96) d'une roue de turbine (34) montée sur ledit arbre (36) pour tourner avec celui-ci, la roue de compresseur (32) et la roue de turbine (34) étant axialement espacées de manière à définir entre elles un espace axial s'étendant radialement, le carter (22, 24) comprenant une cloison (80) qui s'étend radialement vers l'intérieur, vers l'arbre (36), dans l'espace compris entre la roue de turbine (34) et la roue de compresseur (32) et qui définit avec la face arrière (94) de la roue de compresseur (32) ledit espace libre (92), d'autres moyens d'étanchéité (78) étant prévus pour coopérer avec la cloison (80) et avec les parties tournantes de façon à empêcher sensiblement l'écoulement de fluide entre la cloison et les parties tournantes, le chemin de circulation comprenant un passage de circulation de fluide (88) qui assure la communication entre l'espace libre (92) et ladite chambre (104) de la machine.

13. Dispositif d'étanchéité d'arbre suivant la revendication 12, caractérisé en ce que la roue de compresseur (32) et la roue de turbine (34) présentent chacune un épaulement (74, 76) en face de l'épaulement de l'autre, lesdits autres moyens d'étanchéité (78) étant annulaires et placés sur les épaulements (74, 76) des roues de compresseur et de turbine (32, 34).

FIG-1

0 092 007

Fig-2

Fig-3

Fig-4

Fig. 5

Fig. 5A

Fig. 6

Fig. 6A

Fig. 7

Fig. 7A